# EUROPÄISCHE PATENTSCHRIFT

(11) **EP 2 990 623 B1**
(45) Veröffentlichungstag und Bekanntmachung des Hinweises auf die Patenterteilung: **07.11.2018**
(21) Anmeldenummer: 14183067.9
(22) Anmeldetag: 01.09.2014
(51) Int. Cl.: F01N 13/18, F01N 1/04, F01N 1/24, F01N 1/08

(54) **Schallabsorber**
Acoustic absorber
Absorbeur acoustique

(43) Veröffentlichungstag der Anmeldung: 02.03.2016
(73) Patentinhaber: ISOLITE GmbH, 67063 Ludwigshafen (DE)
(72) Erfinder: Knoll, Michael, 69488 Birkenau (DE); Regent, Karl Christian, 38304 Wolfenbüttel (DE); Kroll, Matthias, 67273 Dackenheim (DE); Henrich, Bernd, 68163 Mannheim (DE)
(74) Vertreter: Grünecker Patent- und Rechtsanwälte PartG mbB

(56) Entgegenhaltungen:
- EP-A1- 1 861 592
- DE-A1- 2 624 906
- DE-A1-102011 012 202
- DE-U1- 20 218 618
- KR-A- 20030 065 784
- KR-B1- 101 052 593
- US-A- 5 024 289
- US-A- 5 777 947

## Beschreibung

### Gebiet der Erfindung

Die Erfindung betrifft ein Verfahren zur Herstellung von Hochtemperatur-Schalldämpfern unter Verwendung von Mitteln zur akustischen und thermischen Isolation insbesondere im Hochtemperaturbereich sowie mit diesem Verfahren hergestellte Hochtemperatur-Schalldämpfer.

### Stand der Technik

Es ist bekannt, dass Schalldämpfer schallabsorbierende und isolierende Materialien aufweisen können. Dabei können die Schalldämpfer einerseits schichtartig zusammengesetzt werden. Ein schichtweiser Aufbau, beispielsweise das Einlegen von Matten ist jedoch nicht immer möglich und hat überdies Probleme, komplexe geometrische Strukturen auszufüllen, außerdem ergeben sich durch abstehende Faserfilamente Probleme beim Schweißen von Schalenschalldämpfern. Eine andere Möglichkeit ist, dass das schallabsorbierende Material vor dem Verschließen des Schalldämpfers eingebracht wird. Dabei ist jedoch ein Problem, dass Hohlräume, Zwischenräume oder ähnliche Abschnitte des Schalldämpfers nur schwer erreichbar sein können. Wird das Material in Bags / Plastiksäckchen eingebracht, so ist auch damit eine anwendungsspezifische Formung des Materials im Hinblick auf Ecken, Winkel oder Hinterschnitte nur schwer möglich und überdies können Rückstände beziehungsweise Emissionen der verwendeten Bags / Plastiksäckchen problematisch sein.

Die US 5 024 289 A offenbart ein Abgassystem eines internen Verbrennungsmotors und insbesondere die Verwendung von anorganischen Sphäroiden zur Isolierung eines doppelwandigen Abgasrohres eines Autos oder eines andersartig motorisierten Fahrzeugs.

Die KR 101 052 593 B1 offenbart ein Herstellungsverfahren für Vliesstoff mit einem bestimmten Muster, wobei der Vliesstoff laminiert werden kann und zu ballartigen Fasern geformt werden kann, die zur Isolierung verwendet werden können.

Die DE 26 24 906 A1 betrifft einen Einsatzkörper aus hitze- und korrosionsbeständigem Werkstoff als schallschluckende Wellung für Schalldämpfer bei Verbrennungskraftmaschinen, mit einer Schicht aus einem anorganischen temperaturbeständigen Material, die an dem die Abgase führenden perforierten Rohr anliegt.

Die DE 10 2011 012202 A1 betrifft einen Schalldämpfereinsatz für Kraftfahrzeuge, insbesondere für PKW und LKW, und zwar in Form eines Formmaterials aus Glasfasermaterial in gewickelter Form aus einem Endlosglasfasermaterial, wobei das eingesetzte Glasfasermaterial eine texturierte Glasfaser umfasst; und ferner ein Herstellungsverfahren zur Herstellung eines solchen Schalldämpfereinsatzes.

Eine weitere Möglichkeit ist in der EP 1 861 592 geschildert, wobei eine Glasfaser auf ein Rohr- oder Rollenwickler gewickelt wird, der dann entfernt wird, so dass schließlich eine verflachte rohrförmige Masse erhalten bleibt, welche zum Erzeugen einer vorgefertigten Matratze verwendet wird. Ein Problem hierbei kann aber sein, dass dieses Verfahren kompliziert sein kann und die erhaltenen Matratzen für manche anwendungsspezifische Formung nicht genügend gut geeignet sein können.

Angesichts der Probleme im Stand der Technik ist es Aufgabe der vorliegenden Erfindung, eine einfachere Möglichkeit für ein Dämm- und Dämpfungsmaterial, für die Herstellung dieses Dämm-und Dämpfungsmaterials und einen Schalldämpfer, der dieses Dämm- und Dämpfungsmaterial verwendet, sowie ein Verfahren zu dessen Herstellung bereitzustellen.

Diese Aufgabe wird durch ein Verfahren zur Herstellung von Hochtemperatur-Schalldämpfern gemäß Anspruch 1 und durch mit diesem Verfahren hergestellte Hochtemperatur-Schalldämpfer gemäß Anspruch 8 gelöst.

### Beschreibung der Erfindung

Die Erfindung stellt bereit: Ein Verfahren zur Herstellung von Hochtemperatur-Schalldämpfern, das Verfahren umfassend: Bereitstellen einer ersten Mantelschale; Bereitstellen einer zweiten Mantelschale beziehungsweise eines direkt heißgasführenden Bauteils; Bereitstellen von Mitteln zur akustischen und thermischen Isolation, umfassend: Bereitstellen eines Dämm- und Dämpfungsmaterials; Formgebung des Dämm- und Dämpfungsmaterials in bällchenförmige geometrischen Formen, beispielsweise kugelförmigen oder elliptischen Formen, durch formgebende Verfahren, beispielsweise Aufknäueln und/oder Schäumen, so dass bällchenförmige Mittel bereitgestellt werden; wobei das Dämm- und Dämpfungsmaterial faserartig ausgebildet ist und eine textile Glasfaser, eine Silikatglasfaser, eine Keramikfaser; oder ein Gemisch von mehreren dieser Fasern umfasst und wobei das Dämm- und Dämpfungsmaterial zumindest teilweise aus Endlosfaser geformt ist; wobei die Endlosfaser eine handelsübliche ECR Faser, beispielsweise powertex® oder advantex®, oder eine handelsübliche E-Glasfaser ist; wobei die bällchenförmigen Mittel kugelförmig ausgebildet sind und zwei Arten von bällchenförmigen Mitteln mit jeweils zwei unterschiedlichen Radien umfassen, wobei das Verhältnis der beiden Radien konstant ist und insbesondere das Verhältnis der Radien etwa 2,415 beträgt; Verbinden der ersten Mantelschale und der zweiten Mantelschale beziehungsweise des direkt heißgasführenden Bauteils derart dass ein Zwischenraum zwischen ihnen entsteht, der zumindest teilweise von den Mantelschalen umschlossen wird; Einbringen der Mittel zur akustischen und thermischen Isolation in den Zwischenraum zwischen der ersten und der zweiten Mantelschale; Aktivieren der Mittel zur akustischen und thermischen Isolation im Zwischenraum; wobei das Aktivieren der Mittel zur akustischen und thermischen Isolation nach Einbau des Hochtemperatur-Schalldämpfers in ein Fahrzeug während einer ersten Testfahrt oder einem ersten Testlauf eines Motors im Fahrzeug erfolgt.

Das Bereitstellen von Mitteln, insbesondere von im Wesentlichen kugelförmigen oder elliptischen Knäueln aus Dämm- und Dämpfungsmaterial, zur akustischen und thermischen Isolation hat den Vorteil, dass kleine und in ihrem Durchmesser kontrollierbare Einheiten als Formmaterial verfügbar sind, die in Kulissen unterschiedlichster Form in einfacher Weise einbringbar sind. Dabei können die Dichte und der Durchmesser der Mittel variabel gewählt werden. Die Mittel sind in einfacher Weise und in großer Stückzahl herstellbar. Sie lassen sich prinzipiell auch für bereits bestehende Hohlräume einsetzen. Es versteht sich, dass eine Formgebung des Dämm- und Dämpfungsmaterials in geometrischen Formen, beispielsweise kugelförmigen oder elliptischen Formen, durch formgebende Verfahren, beispielsweise Aufknäueln und/oder Schäumen ohne Verwendung eines Wickelkörpers oder rohrförmigen Körpers geschehen kann.

Für die Mittel sind gängige Dämm- und Dämpfungsmaterialien verwendbar. Als Faser ist die Verwendung von Glas-Mineralfasern, Carbonfasern, Silikatglasfasern, Aramid, Naturfasern, Baumwolle, Stahlfasern, Kunststofffasern möglich. Insbesondere sind textile Glasfasern oder Silikatglasfasern billiger herzustellen als Keramikfasern. Ebenso ist die Umweltverträglichkeit von Silikatglasfasern besser als bei anderen Fasern.

Durch die Konfiguration des Dämm- und Dämpfungskörpers bezüglich Dichte und Design ist sowohl eine maximale Raumausfüllung und somit eine dauerhafte Isolationswirkung, als auch eine optimale akustische Auslegung, insbesondere Reduzierung von akustischen Peaks, gegeben. Um eine maximale Raumerfüllung zu erhalten, können die variablen Formkörper aufeinander abgestimmt werden.

Ein Filament mit praktisch nicht begrenzter Länge wird als Endlosfaser bezeichnet. Diese kann ein Bündel (Multifilament oder Multifil) aus mehreren Einzelfilamenten umfassen.

Die entsprechende Endlosfaser, powertex®, advantex®, eine handelsübliche ECR Faser oder eine handelsübliche E-Glasfaser, kann sehr gute Eigenschaften im Bereich der der akustischen und thermischen Isolation bereitstellen.

Als Zwischenraum soll ein Raum zwischen den Mantelschalen verstanden sein, in dem die Mittel gesammelt werden können. Dieser Zwischenraum kann taschenartig ausgebildet sein. Der Zwischenraum kann nach dem Einbringen der Mittel verschlossen werden. Es versteht sich, dass der Schalldämpfer auch mehrere Zwischenräume umfassen kann, die getrennt voneinander mit Mitteln zur akustischen und thermischen Isolation, insbesondere geometrische Formen, beispielsweise kugelförmige Formen oder elliptische Formen, befüllbar sind. Es versteht sich ebenso, dass in einem oder mehreren der Zwischenräume Mittel von unterschiedlichem Durchmesser verwendet werden können. Die Menge an Mitteln, ihre Größe / ihr Durchmesser und damit die resultierende Dichte an Dämm- und Dämpfungsmaterial im Zwischenraum ermöglichen somit eine variable Einstellung der akustischen Performance und letztlich eine Verbesserung der Leistungsfähigkeit des durch das Verfahren hergestellten Schalldämpfers, indem die Oberflächentemperatur des zu dämmenden Fahrzeugteil reduziert werden kann. Das Aktivieren, auch Expansionsaktivierung genannt, kann typischerweise durch Erhitzen erfolgen. Der Schritt Expansionsaktivierung ermöglicht es, das Dämm- und Dämpfungsmaterial an der richtigen Stelle in seiner für die zukünftige Verwendung endgültigen Form und mit seinem endgültigen Volumen bereitzustellen. Es kann insbesondere eine besonders gute Anpassung an das zu dämmende Fahrzeugteil erreicht werden, da sich der Schalldämpfer vor dem Aktivieren zunächst an spezifische mechanische Unebenheiten des zu dämmenden Fahrzeugteils anpassen kann und dann durch Aktivierung seine endgültige Form im Zwischenraum des Schalldämpfers annehmen kann und diesen entsprechend ausfüllen kann.

Die unterschiedlichen Radien R und r beziehen sich dabei auf zwei zueinander ausgelegte Kugeldurchmesser des Dämm-und Dämpfungsmaterials vor der Expansion. Um eine maximale, bestmögliche Raumerfüllung zu erhalten, können die variablen Formkörper aufeinander abgestimmt werden. Insbesondere ist dies für zwei Arten von Formkörpern möglich, deren Material gleich sein kann, aber deren kugelförmiger Durchmesser / Radien jeweils verschieden sind. Hier geht es darum, die Raumerfüllung vor der Expansion zu erhöhen und somit eine homogene Verteilung des Dämm-und Dämpfungsmaterials nach Expansion zu erreichen. Dies kann positive Auswirkung auf die Thermik und Akustik haben, da eventuelle Hotspots und Hallräume vermieden werden können. Ein Beispiel für eine maximale Raumerfüllung ist die Anpassung zweier zu einander passender Kugeldurchmesser kann für zwei verschiedene Radien R und r gegeben werden, wobei eine besonders gute Raumerfüllung für ein Verhältnis von R/r = 2,415 erreicht werden kann. Dabei können die verschiedenen Radien beispielsweise durch Kompression des Materials erreicht werden.

In dem Verfahren kann das Bereitstellen der Mittel zur akustischen und thermischen Isolation ferner umfassen, dass vor oder während oder nach der Formgebung ein Bindemittel hinzugegeben wird.

Das Hinzufügen von Bindemittel ist optional. Durch ein Bindemittel kann eine festere Formgebung erzielt werden.

In dem Verfahren kann das Bereitstellen der Mittel zur akustischen und thermischen Isolation ferner umfassen, dass das Dämm- und Dämpfungsmaterial Schäume, insbesondere feste Schäume, umfasst.

Dabei können die Schäume beispielsweise ein oder mehrere Arten von Schaum aus Schaumstoffen, Bimsstein, Montageschäumen, Schaumglas, Aerogelen umfassen. Es versteht sich, dass auch weitere Arten von Schaum möglich sein können.

In dem Verfahren kann das Bereitstellen der Mittel zur akustischen und thermischen Isolation ferner den folgenden Schritt umfassen: Einstellen einer Temperatur, oberhalb von der das Dämm-und Dämpfungsmaterial nur bei einem ersten Aktivieren sein Volumen verändert, insbesondere sein Volumen vergrößert.

Insbesondere ermöglichen hinzuzufügenden Additive eine Expansion beim ersten Aufheizen und somit eine Volumenänderung des Dämmkörpers. Das Dämm- und Dämpfungsmaterial kann seine Eigenschaften oberhalb einer Schwellentemperatur bzw. Aktivierungstemperatur einmalig ändern. Durch Beaufschlagen des Materials mit dieser Aktivierungstemperatur über einen bestimmten Zeitraum kann sich beispielsweise das Volumen des Materials verändern - es kann insbesondere sein Volumen vergrößern. Eine typische Aktivierungstemperatur liegt im Bereich zwischen 400° und 500° C, typischerweise 450° C. Es sind aber auch andere Temperaturen möglich.

In dem Verfahren kann der Durchmesser der bällchenförmigen Mittel in geometrischen Formen, insbesondere kugelförmig oder elliptisch, ab etwa 3 mm variieren.

Dabei versteht es sich, dass es sich um den Durchmesser vor dem Aktivieren / Erhitzen handelt. Die Variation der Durchmesser ist nur vor der Expansionsaktivierung von Bedeutung, um eine homogene und möglichst vollständige Füllung des zu dämmenden Raumes zu ermöglichen. Nach der erstmaligen Beaufschlagung mit der Aktivierungstemperatur können zum einen die Fasern expandieren und zum anderen kann sich ein optional hinzugegebener Binder verflüchtigen, wodurch eine weitgehend homogene Dämmstruktur entsteht. Im Hinblick auf elliptische beziehungsweise ellipsoide Formen, insbesondere Rotationsellipsoide, bezieht sich der Durchmesser ab 3 mm auf den kleineren / kleinsten der Durchmesser, die diese Formen beschreiben. Die Durchmesser der Mittel zur akustischen und thermischen Isolation können durch beliebige formgebende Verfahren, wie beispielsweise Aufknäueln, Schäumen, an die unterschiedlichsten Anwendungen angepasst werden. Es versteht sich, dass auch Mittel verschiedener Durchmesser für Anwendungen bereitgestellt werden können.

In dem Verfahren kann das Einbringen der Mittel zur akustischen und thermischen Isolation ein Schütten in den Zwischenraum und/oder ein Einblasen in den Zwischenraum umfassen.

Die Mittel aus Dämm- und Dämpfungsmaterial können durch Schütten, gegebenenfalls auch durch Einwirken der Schwerkraft, oder durch Einblasen in den oder die Zwischenräume eingebracht werden. Somit kann das Dämm- und Dämpfungsmaterial auf besonders einfache Weise in den Schalldämpfer eingebracht werden. Insbesondere ist keinerlei Umwickeln von Elementen notwendig.

In dem Verfahren können die erste und / oder die zweite Mantelschale eine Perforation aufweisen.

Eine zumindest teilweise Perforation des Schalldämpfers kann insbesondere Schallenergie in das Innere des Schalldämpfers leiten. Dort kann sie absorbiert werden. Somit kann gemeinsam mit den Eigenschaften des Dämm- und Dämpfungsmaterials die akustische und thermische Isolation des Schalldämpfers beeinfluss werden.

Die Erfindung offenbart ferner einen Hochtemperatur-Schalldämpfer hergestellt nach dem oben beschriebenen Verfahren.

Im Folgenden werden Ausführungsformen der Erfindung unter Bezugnahme auf die Zeichnungen beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.

### Kurzbeschreibung der Figuren

Fig. 1A und 1B Skizze eines Mittels vor und nach der Aktivierung.
Fig. 2A und 2B Skizze eines Fahrzeug- oder Maschinenteils mit anliegendem Schalldämpfer gemäß der vorliegenden Erfindung vor und nach der Aktivierung.
Fig. 3 Skizze einer Anordnung mit optimaler Raumerfüllung von zwei Arten von kugelförmigen Mitteln mit unterschiedlichen Radien.
Fig. 4 Darstellung eines Verfahrens zur Herstellung eines Schalldämpfers gemäß der vorliegenden Erfindung.

### Detaillierte Beschreibung

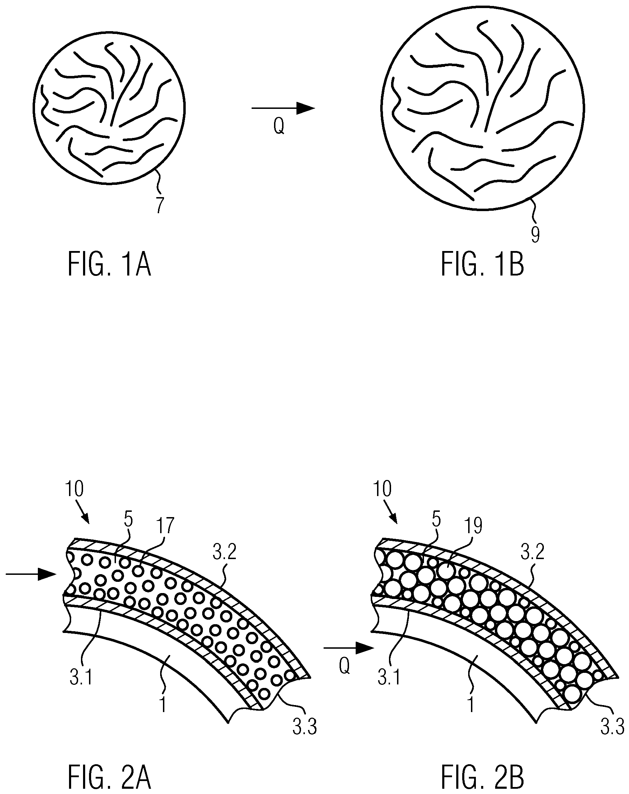

In Figur 1A ist ein Mittel zur akustischen und thermischen Isolation in Form eines Bällchens 7, d.h. ein im Wesentlichen ballförmiger oder im Wesentlichen kugelförmiger Körper aus einer Endlosfaser und einem Bindemittel angedeutet. Der Körper kann ebenso im Wesentlichen elliptisch geformt sein. Das bällchenförmige Mittel 7 kann durch Aufknäueln, Aufwickeln oder ähnliche formgebende Verfahren von einer Endlosfaser geformt werden. Dabei braucht kein Wickelkörper verwendet werden, der später aus dem entstandenen Körper herauszuziehen wäre. Durch die hier beschriebene Formgebung können praktisch Mittel zur akustischen und thermischen Isolation mit einem an eine Anwendung angepassten Durchmesser bereitgestellt werden. Typische Durchmesser der geometrischen Mittel, beispielsweise kugelförmig oder elliptisch, können ab 3 mm beliebig sein, es sind aber auch andere Durchmesser möglich.

In Figur 1B ist dargestellt, dass die bereitgestellten Mittel 7 zur akustischen und thermischen Isolation, insbesondere bällchenförmige Mittel, sich durch Aktivierung / Erhitzen, d.h. eine Zufuhr von Wärme, Q, bei einer Aktivierungstemperatur in ihrem Volumen und letztlich in ihrer Dichte verändern können.

Alternativ kann das Mittel 7 Schäume als Dämm und Dämpfungsmaterial umfassen (nicht gezeigt). Dabei kann es sich insbesondere um feste Schäume handeln. Dabei können insbesondere Schäume von Interesse sein, die ein oder mehrere Arten von Schaum aus Schaumstoffen, Bimsstein, Montageschäumen, Schaumglas, Aerogelen umfassen. Es versteht sich, dass auch weitere Arten von Schaum möglich sein können.

Die Figur 2A zeigt einen Schalldämpfer oder Schallabsorber 10, welcher an einem zu dämmenden Fahrzeugteil oder Maschinenteil 1 anliegt. Der Schalldämpfer 10 umfasst zwei Mantelflächen 3.1 und 3.2. In der vorliegenden Zeichnung sind die beiden Mantelflächen beabstandet gezeichnet. Das Element 3.3 kann ein zusätzliches Element und Bestandteil des Schalldämpfers sein oder es kann auch als ein Abschnitt wenigstens eines der beiden Mantelflächen 3.1 und 3.2 ausgebildet sein. Die beiden Mantelflächen 3.1 und 3.2 können mittels des Elementes 3.3 oder auch unmittelbar auf wenigstens einer der beiden Seiten verbunden sein, so dass ein Zwischenraum 5 zwischen den Mantelflächen 3.1 und 3.2 entsteht. In der Figur 2A ist rein beispielhaft dieser Zwischenraum 5 zusätzlich durch das Element 3.3 begrenzt. Der Zwischenraum 5 kann taschenartig ausgebildet sein, derart, dass er mit Mitteln zur akustischen und thermischen Isolation 7, insbesondere bällchenförmigen Mitteln aus geometrische Formen, beispielsweise kugelförmig oder elliptisch, wie sie beispielsweise in Figur 1 gezeigt sind. Dabei kann der Durchmesser der Mittel 7 geeignet gewählt werden, um den Zwischenraum 5 ausfüllen zu können. Er kann mehrfach unterteilt sein (hier nicht gezeigt). Es ist ebenso möglich, mehrere, getrennte Zwischenräume im Schalldämpfer zu haben, die einzeln befüllbar sind.

In Figur 2A sind Mittel zur akustischen und thermischen Isolation, insbesondere bällchenförmige Mittel in geometrischen Formen, beispielsweise kugelförmige oder elliptische Formen, als Mittel 17 gezeigt, die in den wenigstens einen Zwischenraum 5 eingefüllt werden können. Die bällchenförmigen Mittel 17 in geometrischen Formen, beispielsweise kugelförmige oder elliptische Figuren, können den Mitteln 7 aus den Figuren 1A und 1B entsprechen.

In Figur 2B sind dieselben Elemente wie in der Figur 2A gezeigt, wobei jeweils dieselben Bezugszeichen verwendet werden. Ähnlich wie in Figur 1 ist ein Erhitzen / Aktivieren, d.h. die Zufuhr von Wärme Q durch einen Pfeil bezeichnet. Entsprechend Figur 1 verändern sich die bällchenförmigen Mittel zur akustischen und thermischen Isolation 17 aus Figur 2A zu bällchenförmigen Mittel zur akustischen und thermischen Isolation 19 in Figur 2B mit verändertem Volumen, insbesondere Volumenzunahme, und veränderter Dichte. Dabei kann das Aktivieren der Expansion über einen vordefinierten Zeitraum erfolgen. Somit kann, wie in Figur 2B angedeutet, der Zwischenraum zwischen den zwei Mantelelementen / Kulissen 3.1 und 3.2 des Schalldämpfers 10 nach dem Beaufschlagen mit der Aktivierungstemperatur besonders gut ausgefüllt sein. Eine typische Temperatur des Expansionsvorgangs liegt beispielsweise im Bereich zwischen 400° und 500° C, typischerweise 450° C. Diese Temperatur T kann beispielsweise bei einer ersten Probefahrt eines Fahrzeugs oder bei einem ersten Testlauf einer Maschine erreicht werden. Nach dem Expansionsvorgang verändern sich Volumen und Dichte der Mittel 19 nicht weiter.

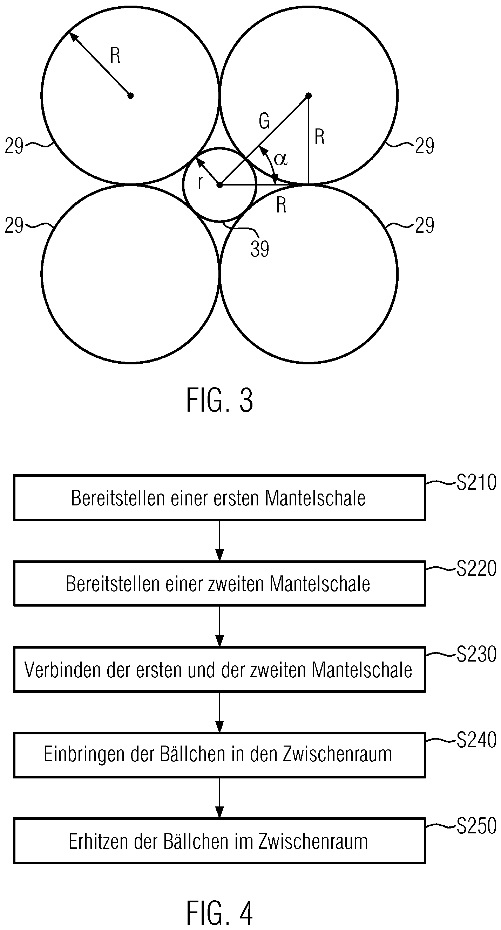

In Figur 3 sind in einer Schnittansicht kugelförmige Mittel 29 und 39 als Dämm- und Dämpfungsmaterial gezeigt. Figur 3 zeigt vier etwa gleich großen Kugeln 29 mit Radius R und eine kleinere Kugel mit Radius r mit dem Bezugszeichen 39. Die Radien R und r beziehen sich auf zwei zueinander ausgelegte Kugeldurchmesser des Dämm-und Dämpfungsmaterials zur Erhöhung der Raumerfüllung vor der Expansion / Aktivierung. Hier geht es darum, die Raumerfüllung vor der Expansion zu erhöhen und somit eine homogenere Verteilung des Dämm-und Dämpfungsmaterials nach Expansion zu erreichen. Dies hat positive Auswirkung auf die Thermik und Akustik, da eventuelle Hotspots und Hallräume vermieden werden können. Dabei können die jeweils verschiedenen Radien R und r der Kugeln 29 und 39 beispielsweise durch Kompression des Materials erreicht werden.

In Figur 3 sind beispielhaft vier Kugeln 29 gezeigt, wobei der Abstand benachbarter Kugeln von Mittelpunkt zu Mittelpunkt jeweils 2R beträgt. Die Figur 3 zeigt ein rechtwinkliges Dreieck, das aus zwei Seiten der Länge R und einer Hypotenuse G mit einem Winkel α = 45° zu den Seiten der Länge R. Die Kugel 39 mit dem Radius r ist in der Mitte der vier Kugeln 29 derart angeordnet, dass es einen konstante Verhältnisfaktor K = R/r gibt, wobei K im vorliegenden Beispiel etwa 2,415 beträgt. Dieser aus der Geometrie / Goniometrie hervorgehende Faktorfür zwei zueinander passende Kugelradien, R und r, ist für jeden Fall konstant in dem der Abstand der Kugelmittelpunkte der zugeordneten Kugeln 2R beträgt. Dabei kann in der gezeigten, optimiert Anordnung von Kugeln zweier verschiedener Radien die kleinere der Kugeln als "Lückenfüller" angesehen werden.

In Figur 4 ist ein Ablaufschema für ein Verfahren zur Herstellung eines Schalldämpfers gemäß der vorliegenden Erfindung dargestellt.

In Schritt S210 erfolgt das Bereitstellen einer ersten Mantelschale, Element 3.1 aus Figur 2A, für den Schalldämpfer. In Schritt S220 erfolgt das Bereitstellen einer zweiten Mantelschale, Element 3.2 aus Figur 2A.

In Schritt S230 erfolgt das Verbinden der beiden Mantelschalen, Elemente 3.1 und 3.2 aus Figur 2A. Wie bereits bei Figur 2A diskutiert, werden die Mantelschalen derart verbunden, dass wenigstens ein Zwischenraum, Element 5 in Figur 2A, zwischen ihnen entsteht, der mit Dämm-und Dämpfungsmaterial in der Form der Bällchen, also Element 17 aus Figur 2A befüllbar ist. Die Verbindung der Mantelschalen kann direkt erfolgen oder aber mittels eines weiteren Elementes, siehe Element 3.3 in Figur 2A.

In Schritt S240 erfolgt das Einbringen der Mittel 17 in den in Zwischenraum 5 zwischen den Mantelschalen 3.1 und 3.2. Dabei kann der Durchmesser der Mittel 17 und die Menge der Mittel 17 anwendungsspezifisch kontrolliert werden.

In Schritt S250 erfolgt das Aktivieren der Expansion der Mittel zur thermischen und akustischen Isolation in dem Schalldämpfer. Dabei kann die dafür nötige Wärme über wenigstens eine der beiden Mantelflächen zugeführt werden, beispielsweise während einer Testfahrt.

Zwischen den Schritten S230 und S240 oder zwischen den Schritten S240 und S250 kann ein Einbau des Schalldämpfers in ein Fahrzeug oder eine Maschine erfolgen. D.h. das Einbringen oder Befüllen des Schalldämpfers mit den Mitteln 17 kann vor oder nach dem Einbau des Schalldämpfers in ein Fahrzeug oder eine Maschine erfolgen. Ebenso ist es optional möglich den Schalldämpfer nach dem Einbringen der Mittel 17 und nach dem Aktivieren / Erhitzen zu verschließen.

## Patentansprüche

1. Verfahren zur Herstellung von Hochtemperatur-Schalldämpfern (10), umfassend:
Bereitstellen einer ersten Mantelschale (3,1);
Bereitstellen einer zweiten Mantelschale (3.2) beziehungsweise eines direkt heißgasführenden Bauteils;
Bereitstellen von Mitteln (7, 17) zur akustischen und thermischen Isolation, umfassend:
Bereitstellen eines Dämm- und Dämpfungsmaterials;
Formgebung des Dämm- und Dämpfungsmaterials in bällchenförmige geometrischen Formen, beispielsweise kugelförmigen oder elliptischen Formen, durch formgebende Verfahren, beispielsweise Aufknäueln und/oder Schäumen, so dass bällchenförmige Mittel bereitgestellt werden;
wobei das Dämm- und Dämpfungsmaterial faserartig ausgebildet ist und eine textile Glasfaser, eine Silikatglasfaser, eine Keramikfaser; oder ein Gemisch von mehreren dieser Fasern umfasst und wobei das Dämm- und Dämpfungsmaterial zumindest teilweise aus Endlosfaser geformt ist; wobei die Endlosfaser eine handelsübliche ECR Faser, beispielsweise powertex® oder advantex®, oder eine handelsübliche E-Glasfaser ist;
wobei die bällchenförmigen Mittel kugelförmig ausgebildet sind und zwei Arten von bällchenförmigen Mitteln mit jeweils zwei unterschiedlichen Radien umfassen, wobei das Verhältnis der beiden Radien konstant ist und insbesondere das Verhältnis der Radien etwa 2,415 beträgt;
Verbinden der ersten Mantelschale (3.1) und der zweiten Mantelschale (3.2) beziehungsweise des direkt heißgasführenden Bauteils derart dass ein Zwischenraum (5) zwischen ihnen entsteht, der zumindest teilweise von den Mantelschalen (3.1, 3.2) umschlossen wird;
Einbringen der Mittel (7, 17) zur akustischen und thermischen Isolation in den Zwischenraum (5) zwischen der ersten und der zweiten Mantelschale (3.1, 3.2);
Aktivieren der Mittel (7,17) zur akustischen und thermischen Isolation im Zwischenraum (5);
wobei das Aktivieren der Mittel (7, 17) zur akustischen und thermischen Isolation nach Einbau des Hochtemperatur-Schalldämpfers (10) in ein Fahrzeug während einer ersten Testfahrt oder einem ersten Testlauf eines Motors im Fahrzeug erfolgt.

2. Verfahren gemäß Anspruch 1, wobei das Bereitstellen der Mittel (7, 17) zur akustischen und thermischen Isolation ferner umfasst, dass vor oder während oder nach der Formgebung ein Bindemittel hinzugegeben wird.

3. Verfahren gemäß wenigstens einem der Ansprüche 1 - 2, wobei das Bereitstellen der Mittel (7, 17) zur akustischen und thermischen Isolation ferner umfasst, dass das Dämm- und Dämpfungsmaterial Schäume, insbesondere feste Schäume, umfasst.

4. Verfahren gemäß wenigstens einem der Ansprüche 1 - 3, wobei das Bereitstellen der Mittel (7, 17) zur akustischen und thermischen Isolation ferner den Schritt umfasst: Einstellen einer Temperatur, oberhalb von der das Dämm- und Dämpfungsmaterial nur bei einem ersten Aktivieren sein Volumen verändert, insbesondere sein Volumen vergrößert.

5. Verfahren gemäß wenigstens einem der Ansprüche 1 - 4, wobei der Durchmesser der bällchenförmigen Mittel in geometrischen Formen, insbesondere kugelförmig oder elliptisch, ab etwa 3 mm variieren kann.

6. Verfahren gemäß einem der Ansprüche 1 - 5, wobei das Einbringen der Mittel zur akustischen und thermischen Isolation (7, 17) ein Schütten in den Zwischenraum (5) und/oder ein Einblasen in den Zwischenraum (5) umfasst.

7. Verfahren gemäß wenigstens einem der Ansprüche 1 - 6, wobei die erste und / oder die zweite Mantelschale (3.1, 3.2) eine Perforation aufweist.

8. Hochtemperatur-Schalldämpfer (10) hergestellt nach dem Verfahren gemäß wenigstens einem der Ansprüche 1 - 7.

## Claims

1. A method of manufacturing high temperature-sound absorbers (10), comprising:
providing a first casing shell (3,1);
providing a second casing shell (3.2) or a direct hot gas-carrying member;
providing means (7, 17) for acoustic and thermal insulation, comprising:
providing an insulating and damping material;
shaping of the insulating and damping material in small ball type geometric shapes, such as spherical or elliptical shapes, by shaping processes, for example forming into a ball and / or foaming up, such that ball-shaped means are provided;
wherein the insulating and damping material is fiber-shaped and comprises a textile fiber, a silica glass fiber, a ceramic fiber; or a mixture of several of these fibers and wherein the insulating and damping material is at least partially formed of continuous fiber; wherein the continuous fiber is powertex®, advantex®, a commercially available ECR fiber or a standard E-glass fiber;
wherein the ball-shaped means are spherical and comprise two types of ball-shaped means, having two different radii, respectively, wherein the ratio of the two radii is constant and in particular the ratio of the radii is about 2.415;
connecting the first casing shell (3.1) with the second casing shell (3.2)or with the direct hot gas-carrying member such that a gap (5) is formed between them, which is at least partially enclosed by the shell elements (3.1, 3.2);
introducing the means (7, 17) for acoustic and thermal insulation into the gap (5) between the first and the second casing shell (3.1, 3.2);
activating the means (7,17) for acoustic and thermal insulation in the gap (5);
wherein the activation of the means (7, 17) for acoustic and thermal insulation after installing the high-temperature sound absorber (10) in a vehicle is performed during a first test drive, or a first test run of an engine in the vehicle.

2. The method according to claim 1, wherein providing of the means (7, 17) for acoustic and thermal insulation further comprises that a binder is added before or during or after shaping.

3. The method according to at least one of claims 1 - 2, wherein providing of the means (7, 17) for acoustic and thermal Isolation further comprises that the insulating and damping material comprises foams, in particular solid foams.

4. The method according to at least one of claims 1 - 3, wherein providing of the means (7, 17) for acoustic and thermal insulation further comprises the step of setting a temperature above which the insulating and damping material changes its volume only at a first activating, and in particular, increases its volume.

5. The method according to at least one of claims 1 - 4, wherein the diameter of the ball-shaped means shaped in geometrical shapes, in particular spherical or elliptical shapes, can vary starting from 3 mm.

6. The method according to one of claims 1 - 5, wherein the introduction of the means for acoustic and thermal insulation (7, 17) comprises pouring the means into the gap (5) and / or a blowing the means into the gap (5).

7. The method according to at least one of claims 1 - 6, wherein the first and / or the second casing shell (3.1, 3.2) have a perforation.

8. High temperature-sound absorber (10) manufactured according to the method according to at least one of claims 1 - 7.

## Revendications

1. Procédé de fabrication de silencieux haute-température (10), comprenant :
la fourniture et la préparation d'une première coque-enveloppe (3.1) ;
la fourniture et la préparation d'une deuxième coque-enveloppe (3.2), à savoir d'une pièce véhiculant directement des gaz chauds ;
la fourniture et la préparation de moyens (7, 17) pour l'isolation acoustique et thermique, comprenant :
la fourniture et la préparation d'un matériau d'atténuation et d'amortissement ;
une mise en forme du matériau d'atténuation et d'amortissement en des formes géométriques de petites boules, par exemple des formes sphériques ou elliptiques, par des procédés de formage, par exemple par pelotonnage et/ou moussage, de manière à fournir ainsi des moyens sous forme de petites boules ;
le matériau d'atténuation et d'amortissement se présentant sous forme de fibres et comprenant une fibre de verre textile, une fibre de verre de silice, une fibre céramique ou un mélange de plusieurs de ces fibres, et le matériau d'atténuation et d'amortissement étant formé au moins partiellement par une fibre sans fin; la fibre sans fin étant une fibre ECR courante du commerce, par exemple powertex® ou advantex®, ou bien une fibre de verre E courante du commerce ;
les moyens sous forme de petites boules étant de forme sphérique, et comportant deux types de moyens sous forme de petites boules avec respectivement deux rayons différents, le rapport des deux rayons étant constant et le rapport des rayons étant de préférence d'environ 2,415 ;
l'assemblage de la première coque-enveloppe (3.1) et de la deuxième coque-enveloppe (3.2), à savoir la pièce véhiculant directement des gaz chauds, de manière à former entre-elles un espace intermédiaire (5), qui est au moins partiellement entouré par les coques-enveloppe (3.1, 3.2) ;
l'introduction des moyens (7, 17) pour l'isolation acoustique et thermique, dans l'espace intermédiaire (5) entre la première et la deuxième coque-enveloppe (3.1, 3.2) ;
l'activation des moyens (7, 17) pour l'isolation acoustique et thermique dans l'espace intermédiaire (5) ;
l'activation des moyens (7, 17) pour l'isolation acoustique et thermique étant effectuée après l'implantation du silencieux haute-température (1) dans un véhicule, pendant un premier essai routier ou un premier essai de fonctionnement d'un moteur dans le véhicule.

2. Procédé selon la revendication 1, d'après lequel la fourniture et la préparation des moyens (7, 17) pour l'isolation acoustique et thermique comprend, par ailleurs, le fait d'ajouter un liant, avant, pendant ou après la mise en forme.

3. Procédé selon l'une au moins des revendications 1 - 2, d'après lequel la fourniture et la préparation des moyens (7, 17) pour l'isolation acoustique et thermique comprend, par ailleurs, le fait que le matériau d'atténuation et d'amortissement comporte des mousses, notamment des mousses solides.

4. Procédé selon l'une au moins des revendications 1 - 3, d'après lequel la fourniture et la préparation des moyens (7, 17) pour l'isolation acoustique et thermique comprend, par ailleurs, l'étape consistant à régler une température au-dessus de laquelle le matériau d'atténuation et d'amortissement ne modifie son volume, en particulier augmente de volume, que lors d'une première activation.

5. Procédé selon l'une au moins des revendications 1 - 4, d'après lequel le diamètre des moyens en forme de petites boules à formes géométriques, notamment sphériques ou elliptiques, peut varier à partir d'environ 3 mm.

6. Procédé selon l'une des revendications 1 - 5, d'après lequel l'introduction des moyens (7, 17) pour l'isolation acoustique et thermique, comprend un déversement en vrac dans l'espace intermédiaire (5) et/ou un soufflage dans l'espace intermédiaire (5).

7. Procédé selon l'une au moins des revendications 1 - 6, d'après lequel la première et/ou la deuxième coque-enveloppe (3.1, 3.2) présente une perforation.

8. Silencieux haute-température (10) fabriqué conformément au procédé selon l'une au moins des revendications 1 - 7.
